# EUROPÄISCHE PATENTSCHRIFT

(11) **EP 2 024 665 B1**
(45) Veröffentlichungstag und Bekanntmachung des Hinweises auf die Patenterteilung: **13.10.2010**
(21) Anmeldenummer: 07725007.4
(22) Anmeldetag: 09.05.2007
(51) Int. Cl.: B60W 10/02, B60W 10/10, B60W 30/18, F16H 61/04

(54) **KRAFTFAHRZEUGGETRIEBEVORRICHTUNG**
TRANSMISSION DEVICE FOR A MOTOR VEHICLE
DISPOSITIF DE TRANSMISSION D'UN VÉHICULE AUTOMOBILE

(30) Priorität: 31.05.2006 DE 102006025277
(43) Veröffentlichungstag der Anmeldung: 18.02.2009
(73) Patentinhaber: Daimler AG, 70327 Stuttgart (DE)
(72) Erfinder: GUGGOLZ, Manfred, 71277 Rutesheim (DE); HILLENBRAND, Werner, 72639 Neuffen (DE); KOK, Wilhelmus, 71364 Heilbronn (DE); ULMER, David, 70794 Filderstadt (DE)
(74) Vertreter: JENSEN & SON
(86) Internationale Anmeldenummer: PCT/EP2007/004084
(87) Internationale Veröffentlichungsnummer: WO 2007/137680

(56) Entgegenhaltungen:
- WO-A-2004/013517
- WO-A-2006/032317
- CH-A- 482 564
- DE-A1- 19 730 746
- DE-A1- 19 826 068
- DE-C1- 19 615 742
- US-A- 2 550 545
- US-A- 3 667 309
- US-A1- 2002 062 188

## Beschreibung

Die Erfindung betrifft insbesondere eine Kraftfahrzeuggetriebevorrichtung nach dem Oberbegriff des Patentanspruchs 1.

Aus der EP 0 512 727 B1 ist eine Kraftfahrzeuggetriebevorrichtung mit einer von einer zentralen Steuereinheit gebildeten Betätigungseinheit bekannt, die dazu vorgesehen ist, eine Zahn-auf-Zahn-Stellung von zwei Klauenkupplungsmitteln aufzuheben. Dabei ist die Betätigungseinheit dazu vorgesehen, eine Trennkupplung für eine kurze Zeitspanne einzurücken und anschließend wieder auszurücken.

Aus der WO 2006/032317 A1 ist eine gattungsbildende Kraftfahrzeuggetriebevorrichtung bekannt, bei der zum Aufheben einer Zahn-auf-Zahn-Stellung von zwei Klauenkupplungsmitteln eine Getriebebremse angesteuert wird und so ein Bremsmoment auf eine ein Klauenkupplungsmittel tragende Welle aufgebracht wird.

Der Erfindung liegt insbesondere die Aufgabe zugrunde, eine Kraftfahrzeuggetriebevorrichtung bereitzustellen, bei der hinsichtlich des dynamischen Verhaltens und des Komforts verbesserte Eigenschaften erreichbar sind. Die Aufgabe wird gelöst durch die Merkmale des Patentanspruchs 1, wobei weitere Ausgestaltungen der Erfindung den Nebenansprüchen und Unteransprüchen entnommen werden können.

Die Erfindung geht aus von einer Kraftfahrzeuggetriebevorrichtung mit einer Betätigungseinheit, die dazu vorgesehen ist, eine Zahn-auf-Zahn-Stellung von Kupplungsmitteln, insbesondere von Klauenkupplungsmitteln, aufzuheben.

Die Betätigungseinheit ist dazu vorgesehen, eine Getriebebremse bei erkannter Zahn-auf-Zahn-Stellung zu betätigen. Dabei soll unter einer Getriebebremse insbesondere eine Einheit verstanden werden, die zum Bremsen eines Getriebemittels vorgesehen ist, und zwar insbesondere, um einen Synchronisiervorgang zu erzielen. Unter einer Betätigungseinheit soll insbesondere eine Regelungs- und/oder Steuerungseinheit verstanden werden, die vorzugsweise eine Recheneinheit und eine Speichereinheit mit einem entsprechenden Programm zur Betätigung bzw. zur Steuerung und/oder Regelung der Getriebebremse umfasst. Ferner soll unter "vorgesehen" insbesondere speziell ausgestattet, ausgelegt und/oder programmiert verstanden werden.

Die Kraftfahrzeuggetriebevorrichtung weist eine Betätigungseinheit zur Betätigung einer Trennkupplung auf, wobei die Betätigungseinheit dazu vorgesehen ist, d.h. insbesondere speziell ausgelegt, ausgestattet und/oder programmiert ist, die Trennkupplung bei einer erkannten Zahn-auf-Zahn-Stellung zu betätigen, und zwar um einen Impuls auf die Kupplungsmittel zu erzeugen und so die Zahn-auf-Zahn-Stellung aufzuheben. Die Trennkupplung kann vorteilhaft dazu verwendet werden, auch bei Stillstand eines Kraftfahrzeugs eine Zahn-auf-Zahn-Stellung aufzuheben. Ferner können unerwünscht hohe Momente und/oder Belastungen der Getriebebremse vermieden werden, indem für stärkere Drehimpulse die Trennkupplung genutzt wird.

Unter einer Trennkupplung soll dabei insbesondere eine Kupplung verstanden werden, die zwischen einer Brennkraftmaschine und einem Kraftfahrzeuggetriebe angeordnet ist, wie beispielsweise ein Wandler, eine Wandlerüberbrückungskupplung und/oder insbesondere eine automatisiert betätigbare Reibkupplung.

Die Betätigungseinheit zur Betätigung der Getriebebremse und die Betätigungseinheit zur Betätigung der Trennkupplung sind dazu vorgesehen, aufeinander abgestimmt Betätigungen einzuleiten, um eine Zahn-auf-Zahn-Stellung aufzuheben bzw. die Betätigungseinheiten sind vorzugsweise funktionstechnisch gekoppelt, wodurch gezielt gewünschte Wechselwirkungen erzielt werden können, beispielsweise kann abhängig von einer Impulszahl der Getriebebremse die Trennkupplung aktiviert werden. Ferner ist denkbar, dass abhängig von der Wirkung der Getriebebremse und/oder der Trennkupplung eine entsprechend darauf abgestimmte Betätigung jeweils der anderen Einheit mittels der entsprechenden Betätigungseinheit vorgenommen wird usw.

Die Betätigungseinheiten können in verschiedener, dem Fachmann als sinnvoll erscheinender Hinsicht gekoppelt sein, wie beispielsweise bzgl. einer Impulsdauer, Impulsanzahl usw. Besonders vorteilhaft sind die Betätigungseinheit zur Betätigung der Getriebebremse und die Betätigungseinheit zur Betätigung der Trennkupplung dazu vorgesehen, die Getriebebremse und die Trennkupplung zumindest im Wesentlichen zeitgleich anzusteuern. Die Erfindung geht von der Erkenntnis aus, dass die Trennkupplung grundsätzlich eine längere Verzögerungszeit aufweist, so dass vorteilhaft zwei nacheinander geschaltete Impulse auf die Kupplungsmittel erzielt werden können, und zwar vorzugsweise zuerst ein kleinerer Impuls mittels der Getriebebremse und anschließend ein größerer Impuls mittels der Trennkupplung. Sollte nicht bereits mittels des kleineren Impulses, eingeleitet durch die Getriebebremse, die Zahn-auf-Zahn-Stellung aufgehoben werden können, kann gegenüber einer alleinigen Betätigung der Trennkupplung ohne Zeitverzug die Zahn-auf-Zahn-Stellung mittels eines größeren Impulses, eingeleitet durch die Trennkupplung, aufgehoben werden. Unter im Wesentlichen zeitgleich soll dabei verstanden werden, dass zwischen den Ansteuerungszeitpunkten der Trennkupplung und der Getriebebremse eine Zeitspanne kleiner 40 msec liegt.

Mit einer entsprechenden Ausgestaltung kann eine vorteilhaft geringe Verzögerungszeit zwischen der Aktivierung der Getriebebremse und dessen Wirkung auf die Kupplungsmittel erreicht werden, insbesondere kann gegenüber einer zwischen einer Brennkraftmaschine und einem Kraftfahrzeuggetriebe angeordneten Trennkupplung eine kürzere Verzögerungszeit erzielt werden. Es kann eine deutliche Reduktion einer mittleren Zeit zum Einspuren der Kupplungsmittel bzw. der Klauenkupplungsmittel erreicht werden. Die Getriebebremse ist nahe an den Kupplungsmitteln anordenbar, so dass eine vorteilhafte Kraftübertragung bzw. Drehmomentübertragung von der Getriebebremse zu den Kupplungsmitteln erreicht werden kann. Insbesondere kann eine Drehmomentübertragung zur Auflösung einer Zahn-auf-Zahn-Stellung über eine Splittgruppe vermieden werden. Zudem kann der Komfort gesteigert werden, indem eine Getriebebremse auf Grund ihrer relativ kleinen Dimensionierung besonders genau und reproduzierbar steuerbar ist, insbesondere grundsätzlich genauer und reproduzierbarer als eine Trennkupplung zwischen der Brennkraftmaschine und dem Kraftfahrzeuggetriebe. Ferner weist eine Getriebebremse grundsätzlich ein begrenztes maximal übertragbares Drehmoment auf, wodurch systembedingte Schläge zumindest weitgehend vermieden werden können.

In einer weiteren Ausgestaltung der Erfindung wird vorgeschlagen, dass die Kraftfahrzeuggetriebevorrichtung die von einer Lamellenbremse gebildete Getriebebremse umfasst. Durch die Ausgestaltung der Getriebebremse als Lamellenbremse kann dieselbe besonders konstruktiv einfach und Platz sparend integriert werden, und zwar insbesondere, wenn Lamellen der Lamellenbremse mittels einer Aktuatoreinheit zur Erzeugung einer Reibkraft mit einer Normalkraft belastbar sind. Vorteilhaft ist die Getriebebremse zum Bremsen einer Vorgelegewelle vorgesehen und ist hierzu insbesondere vorzugsweise direkt mit der Vorgelegewelle gekoppelt, wodurch die Getriebebremse vorteilhaft zur Synchronisierung eingesetzt werden kann.

Umfasst die Kraftfahrzeuggetriebevorrichtung eine rheologische Bremseinheit, und zwar insbesondere eine magnetorheologische Bremseinheit, kann eine Bremswirkung besonders schnell und exakt eingestellt werden. Dabei soll unter einer rheologischen Bremseinheit insbesondere eine Bremseinheit mit einem Medium verstanden werden, dessen Konsistenz zur Erzielung einer Bremswirkung verändert werden kann, wie insbesondere mit einer magnetorheologischen Flüssigkeit, deren Konsistenz durch ein Magnetfeld verändert werden kann, vorzugsweise stufenlos von einer flüssigen zu einer zumindest weitgehend festen Konsistenz. Eine magnetorheologische Flüssigkeit ist beispielsweise eine Suspension von kleinen magnetisch polarisierbaren Partikeln, die in einer Trägerflüssigkeit fein verteilt sind. In der Regel handelt es sich dabei um Eisenpartikel in einem Öl. In einem Magnetfeld werden die Partikel polarisiert und ordnen sich längs von Feldlinien des Magnetfelds in Ketten an. Durch eine Strukturbildung versteift sich die Suspension. Nach dem Abschalten des Magnetfelds kehrt das verfestigte Material in seinen flüssigen Ausgangszustand zurück.

Umfasst die Kraftfahrzeuggetriebevorrichtung eine von einer motorischen Bremseinheit gebildete Getriebebremse, kann vorteilhaft zumindest bei Vorliegen bestimmter Betriebsparameter mittels der motorischen Bremseinheit ein einem Bremsmoment entgegen gesetztes Antriebsmoment erzeugt werden, um eine Zahn-auf-Zahn-Stellung aufzuheben. Die motorische Bremseinheit kann dabei von verschiedenen, dem Fachmann als sinnvoll erscheinenden Einheiten gebildet sein, jedoch besonders vorteilhaft von einer elektromotorischen Einheit.

Ferner wird vorgeschlagen, dass die Betätigungseinheit dazu vorgesehen ist, die Getriebebremse zumindest abhängig von einem während des Betriebs erfassten Betriebsparameter zu betätigen, um eine Zahn-auf-Zahn-Stellung aufzuheben, wodurch gezielt vorliegende Randbedingungen vorteilhaft berücksichtigt werden können. Grundsätzlich kann die Getriebebremse abhängig von verschiedenen, dem Fachmann als sinnvoll erscheinenden Betriebsparametern betätigt werden, wie abhängig von einem vorliegenden Getriebegang bzw. zu schaltendem Getriebegang und/oder vorteilhaft abhängig von einem wirkenden Druck, einem Momentenaufbau bzw. Momentenverlauf und/oder einer wirkenden Kraft, wie insbesondere an der Getriebebremse selbst. Vorzugsweise weist hierfür die Betätigungseinheit eine Sensoreinheit zur Sensierung des Betriebsparameters auf, wobei grundsätzlich jedoch auch relativ zur Betätigungseinheit bezogene externe Sensoreinheiten genutzt werden können. Von entsprechenden externen Sensoreinheiten erfasste Signale könnten dann vorzugsweise über Bussysteme an die Betätigungseinheit übermittelt werden.

Weist die Betätigungseinheit zur Betätigung der Getriebebremse eine Lernfunktion auf und ist dazu vorgesehen, über die Lernfunktion wenigstens einen Betriebsparameter zur Betätigung der Getriebebremse einzulernen, kann vorteilhaft ein sich in Richtung eines Optimums selbst adaptierendes System erzielt werden. Vorzugsweise kann ein vorteilhafter Wert ermittelt werden, wie lange und/oder mit welchem Druck die Getriebebremse vorzugsweise grundsätzlich und/oder auch gezielt bei Vorliegen bestimmter Betriebsparameter zu betätigen ist.

In einer weiteren Ausgestaltung der Erfindung wird vorgeschlagen, dass die Betätigungseinheit dazu vorgesehen ist, die Getriebebremse in zumindest einem Betriebsmodus zur Aufhebung einer Zahn-auf-Zahn-Stellung mehrmals impulsweise zu betätigen bzw. anzusteuern, wodurch vorteilhaft der Verschleiß reduziert werden kann, insbesondere indem unnötig hohe Belastungen der Getriebebremse vermieden werden können, und zwar insbesondere, wenn die Getriebebremse im Verlauf der Zeit mit größeren Zeitintervallen und/oder zur Erzielung einer größeren Bremswirkung mit einem größeren Druck usw. entsprechend angesteuert wird.

In einer weiteren Ausgestaltung der Erfindung wird vorgeschlagen, dass die Betätigungseinheit zur Betätigung der Getriebebremse und die Betätigungseinheit zur Betätigung der Trennkupplung zumindest teilweise einstückig ausgebildet sind, wodurch zusätzliche Bauteile, Bauraum, Gewicht, Montageaufwand und Kosten eingespart werden können.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung einer Brennkraftma- schine und eines Kraftfahrzeuggetriebes mit einer Kraftfahrzeuggetriebevorrichtung,
- Fig. 2: eine vergrößere Darstellung einer Getriebebremse,
- Fig. 3: ein Kennliniendiagramm eines ersten Verfahrensab- laufs und
- Fig. 4: ein Kennliniendiagramm eines zweiten Verfahrensab- laufs.

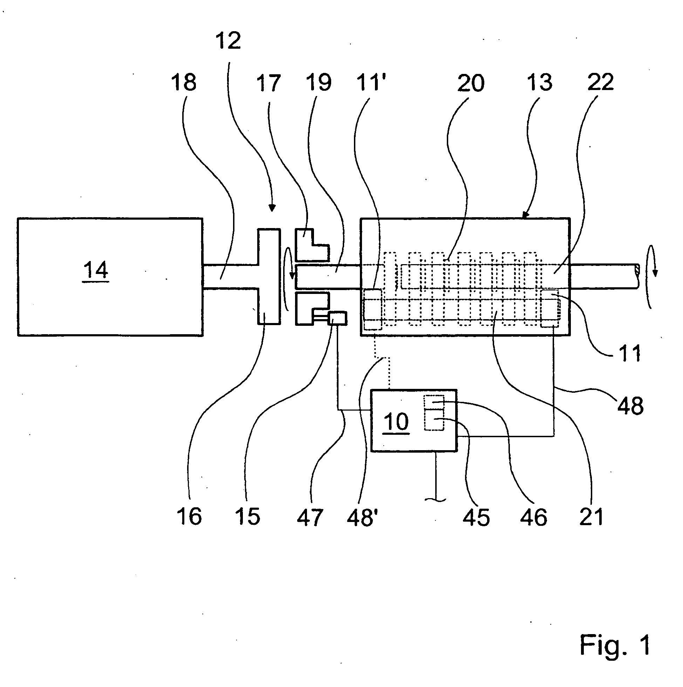

Figur 1 zeigt eine schematische Darstellung einer Brennkraftmaschine 14 und eines Kraftfahrzeuggetriebes 13 mit einer erfindungsgemäßen Kraftfahrzeuggetriebevorrichtung eines nicht näher dargestellten Kraftfahrzeugs, insbesondere eines Lastkraftfahrzeugs. Zwischen der Brennkraftmaschine 14 und dem Kraftfahrzeuggetriebe 13 ist eine automatisiert betätigbare Trennkupplung 12 geschaltet. Die Trennkupplung 12 weist mittels eines Aktuators 15 zusammenpressbare Reibscheiben 16, 17 auf, wobei die Reibscheibe 16 drehfest mit einer Brennkraftmaschinenausgangswelle 18 und die Reibscheibe 17 drehfest mit einer Getriebeeingangswelle 19 verbunden ist.

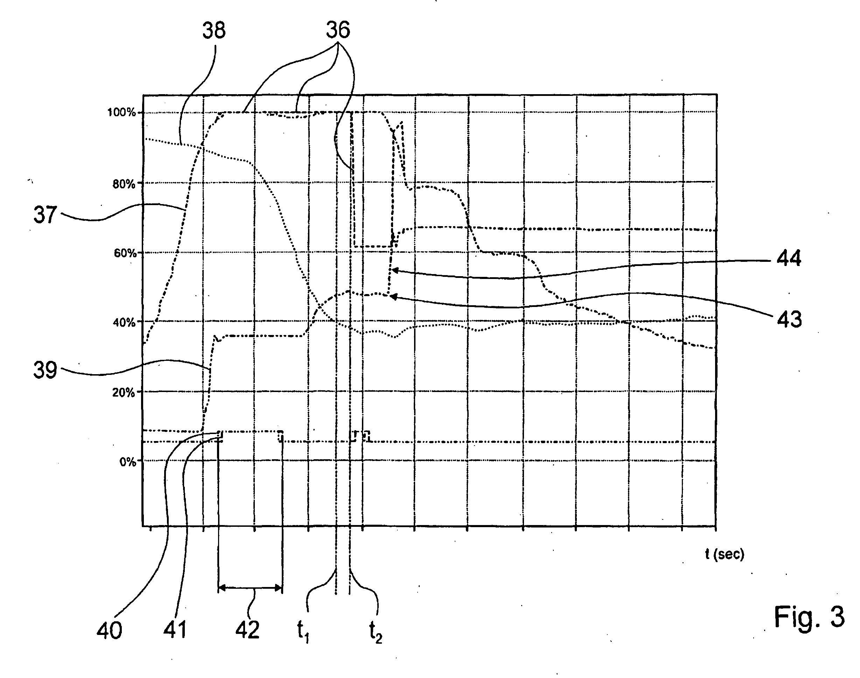

Das Kraftfahrzeuggetriebe 13 umfasst zudem eine von einer Steuerungs- und Regelungseinheit gebildete Betätigungseinheit 10, die dazu vorgesehen ist, eine Zahn-auf-Zahn-Stellung 43 von von Klauenkupplungen gebildeten Kupplungsmitteln 20 aufzuheben und ist dabei insbesondere dazu vorgesehen, eine Getriebebremse 11 des Kraftfahrzeuggetriebes 13 und die Trennkupplung 12 bei erkannter Zahn-auf-Zahn-Stellung 43 zu betätigen bzw. anzusteuern (Figur 1 und 3). Hierfür ist die Betätigungseinheit 10 mit einer Steuerleitung 47 mit dem Aktuator 15 und mit einer Steuerleitung 48 mit der Getriebebremse 11 gekoppelt.

Die Getriebebremse 11 wird von einer Lamellenbremseinheit gebildet, deren Lamellen zur Erzeugung einer Bremskraft mittels einer Normalkraft belastbar sind und die an einem freien Ende einer Vorgelegewelle 21 fest mit derselben gekoppelt ist. Alternativ und/oder zusätzlich könnte auch eine elektromotorische Getriebebremse 11' vorgesehen sein, die beispielsweise ebenfalls mit der Vorgelegewelle 21 gekoppelt sein könnte, wie dies in Figur 1 angedeutet ist. Mittels einer elektromotorischen Getriebebremse 11' könnte neben einem Bremsmoment zur Aufhebung einer Zahn-auf-Zahn-Stellung 43 ein Antriebsmoment zur Aufhebung einer Zahn-auf-Zahn-Stellung 43 eingeleitet werden.

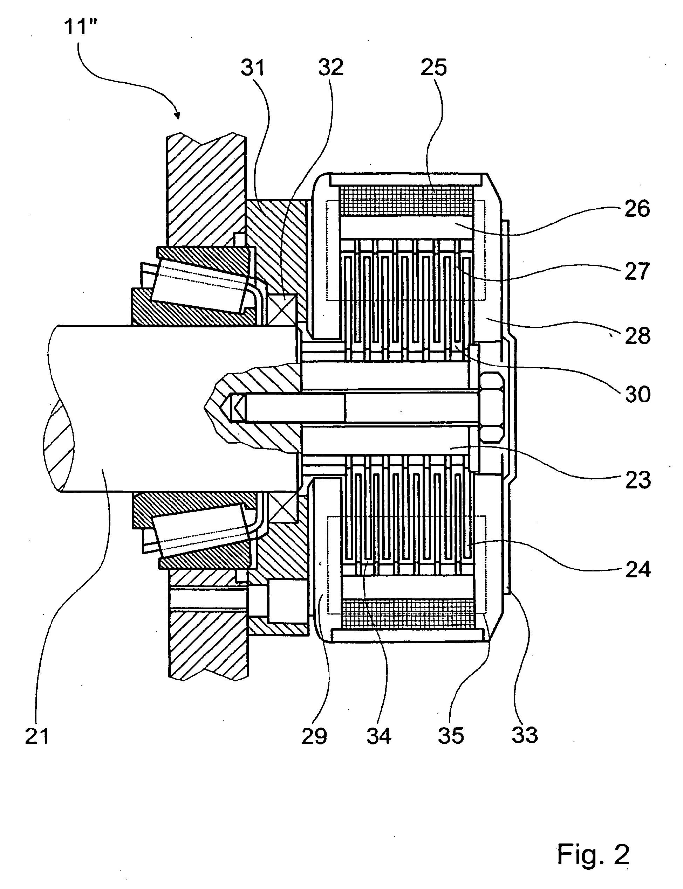

Ferner könnte alternativ und/oder zusätzlich zu einer Getriebebremse 11 mit einem Aktuator zur Erzeugung einer Normalkraft und/oder einer elektromotorischen Getriebebremse 11' eine magnetorheologische Getriebebremse 11" vorgesehen sein, wie dies in Figur 2 dargestellt ist. Die Getriebebremse 11" weist einen drehfest mit der Vorgelegewelle 21 verbundenen Rotor 23 auf, an dem von Dynamoblechen gebildete, radial nach außen weisende, drehfeste Lamellen 24 angeordnet sind. Ferner umfasst die Getriebebremse 11" einen Stator mit einer Ringspule 25, einem antimagnetischen Trägerkörper 26, am Trägerkörper 26 befestigte, radial nach innen weisende, von Dynamoblechen gebildete Lamellen 27, die zwischen die Lamellen 24 greifen, und in axialer Richtung vor und nach den Lamellen 24, 27 Eisenkerne 28, 29. Die Lamellen 24, 27 sind in einem Lamellenraum 30 angeordnet, der in Richtung der Vorgelegewelle 21 mittels eines ersten Lagerdeckels 31 und mittels einer Radialwellendichtung 32 und in die von der Vorgelegewelle 21 abgewandte Richtung mittels eines zweiten Lagerdeckels 33 abgedichtet ist. Im Lamellenraum 30 ist eine magnetorheologische Flüssigkeit 34 angeordnet, deren Konsistenz mittels von der Ringspule 25 erzeugbaren Magnetfeldlinien 35 verändert werden kann, und zwar kann durch Anlegen eines Magnetfelds die Flüssigkeit 34 stufenlos in ein nahezu festes Medium überführt werden.

In einem ersten vorgeschlagenen Verfahren betätigt die Betätigungseinheit 10 die Trennkupplung 12 und die Getriebebremse 11 aufeinander abgestimmt, um eine Zahn-auf-Zahn-Stellung 43 aufzuheben (Figur 3). In Figur 3 sind ein Kupplungsvorgabeweg 36, ein Kupplungsistweg 37, eine Vorgelegewellendrehzahl 38, ein Gangweg 39 sowie ein Ansteuersignal 40 der Getriebebremse 11 und ein Ventilansteuersignal 41 eines Hydraulikventils einer hydraulischen Aktuatoreinheit der Getriebebremse 11 über der Zeit t dargestellt. Bei 100% ist die Trennkupplung vollständig geöffnet.

Wird nach einem Synchronisiervorgang 42 mittels der Getriebebremse 11 zu einem Zeitpunkt t₁ eine Zahn-auf-Zahn-Stellung 43 erkannt, wird mittels der Betätigungseinheit 10 zu einem Zeitpunkt t₂ die Trennkupplung 12 und die Getriebebremse 11 zeitgleich über jeweils eine Zeitspanne angesteuert. Die Ansteuerung der Getriebebremse 11 mit einer Zeitdauer von unter 50 msec bzw. das kurzzeitige Schließen der Getriebebremse 11 führt bereits nach einer geringen Zeitverzögerung, ca. unter 100 msec, zu einer kurzen Drehzahlabsenkung der Vorgelegewelle 21. Im dargestellten Beispiel führt der durch die Drehzahlabsenkung hervorgerufene Drehimpuls zu einer Auflösung der Zahn-auf-Zahn-Stellung 43, wie dies an einem sprunghaften Verlauf 44 des Gangwegs 39 zu erkennen ist. Ein Druck in der Getriebebremse 11 bleibt dabei vorteilhaft so klein, dass die Getriebebremse 11 nur gering belastet wird. Hätte der durch die Getriebebremse 11 hervorgerufene Impuls nicht zu einer Auflösung der Zahn-auf-Zahn-Stellung 43 geführt, hätte zeitlich nachgelagert, und zwar ca. unter 100 msec, ein durch die Trennkupplung 12 hervorgerufener Drehimpuls auf die zu kuppelnden Kupplungsmittel 20 gewirkt.

Die Betätigungseinheit 10 betätigt die Getriebebremse 11 und die Trennkupplung 12 abhängig von einer vorliegenden Geschwindigkeit des Kraftfahrzeugs und abhängig von einer vorliegenden Übersetzung. Ferner weist die Betätigungseinheit 10 eine Lernfunktion auf und ist dazu vorgesehen, über die Lernfunktion einen Betriebsparameter zur Betätigung der Getriebebremse 11 einzulernen, und zwar einen Wert für eine Zeitspanne, wie lang die Getriebebremse 11 angesteuert werden soll.

Zu Beginn einer Einlernphase wird die Getriebebremse 11 tendenziell mit einer zu kurzen Zeitspanne angesteuert. Während der Einlernphase wird die Zeitspanne so lange erhöht, bis erkannt wird, dass ein Impuls erreicht werden kann, der mit gewünschter Wahrscheinlichkeit zu einer Aufhebung der Zahn-auf-Zahn-Stellung 43 führt. Die Betätigungseinheit 10 weist hierfür eine Recheneinheit 45 und eine Speichereinheit 46 auf, in der ein Betriebsprogramm gespeichert ist und in der durch nicht näher darstellte Sensoreinheiten erfasste Betriebsparameter sowie neu ermittelte Betriebsparameter zur Betätigung der Getriebebremse 11 gespeichert werden.

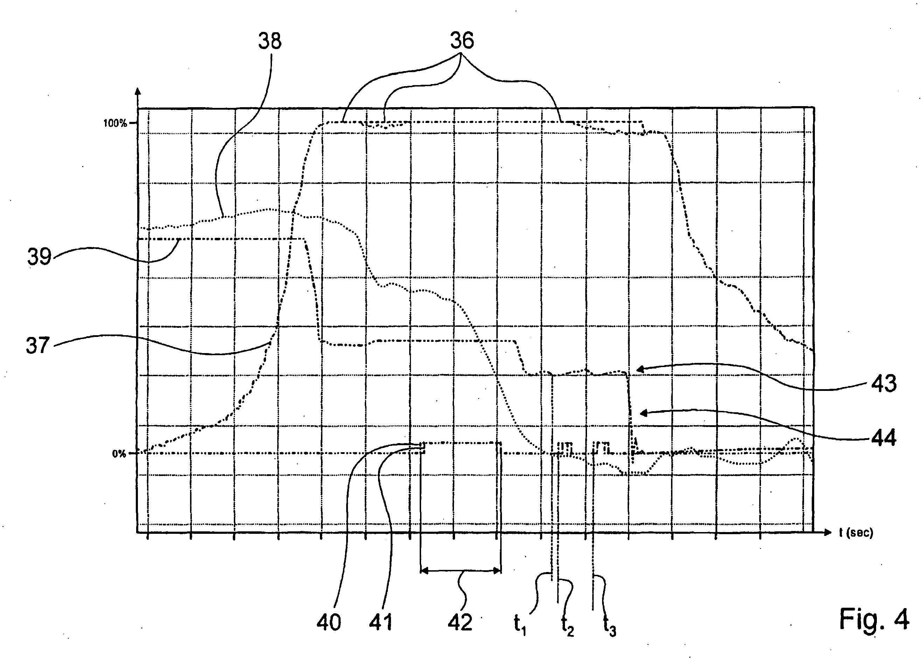

In einem alternativen Verfahren, das nicht zur Erfindung gehört, gemäß Fig. 4, wird ausschließlich die Getriebebremse 11 von der Betätigungseinheit 10 zur Aufhebung einer Zahn-auf-Zahn-Stellung 43 betätigt. Wird nach einem Synchronisiervorgang 42 mittels der Getriebebremse 11 zu einem Zeitpunkt t₁ eine Zahn-auf-Zahn-Stellung 43 erkannt, wird mittels der Betätigungseinheit 10 die Getriebebremse 11 zur Aufhebung der Zahn-auf-Zahn-Stellung 43 mehrmals impulsweise angesteuert, und zwar zu einem ersten Zeitpunkt t₂ und zu einem zweiten Zeitpunkt t₃. Die Getriebebremse 11 wird im Verlauf der Zeit mit immer längeren Impulsen angesteuert, wobei sich die Dauer um jeweils 5 - 20 msec erhöht und jeweils einer Pause von ca. unter 100 msec. Der Druck der Getriebebremse 11 bleibt dabei vorteilhaft so klein, dass die Getriebebremse 11 nur gering belastet wird. Wird eine Aufhebung der Zahn-auf-Zahn-Stellung 43 anhand eines sprunghaften Verlaufs 44 des Gangwegs 39 erkannt, wird die impulsweise Ansteuerung der Getriebebremse 11 beendet. Anschließend wird die Trennkupplung 12 geschlossen.

## Patentansprüche

1. Kraftfahrzeuggetriebevorrichtung mit einer Betätigungseinheit (10), die dazu vorgesehen ist, eine Zahn-auf-Zahn-Stellung (43) von Kupplungsmitteln (20), insbesondere von Klauenkupplungsmitteln, aufzuheben,
wobei die Betätigungseinheit (10) dazu vorgesehen ist, eine Getriebebremse (11; 11'; 11'') bei erkannter Zahn-auf-Zahn-Stellung (43) zu betätigen,
**gekennzeichnet durch**
eine Betätigungseinheit zur Betätigung einer Trennkupplung (12), wobei die Betätigungseinheit dazu vorgesehen ist, die Trennkupplung (12) bei einer erkannten Zahn-auf-Zahn-Stellung (43) zu betätigen, wobei die Betätigungseinheit (10) zur Betätigung der Getriebebremse (11; 11'; 11") und die Betätigungseinheit zur Betätigung der Trennkupplung (12) dazu vorgesehen sind, aufeinander abgestimmt Betätigungen einzuleiten, um eine Zahn-auf-Zahn-Stellung (43) aufzuheben.

2. Kraftfahrzeuggetriebevorrichtung nach Anspruch 1,
**gekennzeichnet durch**
die von einer Lamellenbremse gebildeten Getriebebremse (11, 11").

3. Kraftfahrzeuggetriebevorrichtung nach einem der vorhergehenden Ansprüche,
**gekennzeichnet durch**
die von einer rheologischen Bremseinheit gebildeten Getriebebremse (11'').

4. Kraftfahrzeuggetriebevorrichtung nach einem der vorhergehenden Ansprüche,
**gekennzeichnet durch**
die von einer motorischen Bremseinheit gebildeten Getriebebremse (11').

5. Kraftfahrzeuggetriebevorrichtung nach einem der vorhergehenden Ansprüche,
**dadurch gekennzeichnet, dass**
die Betätigungseinheit (10) dazu vorgesehen ist, die Getriebebremse (11; 11'; 11") zumindest abhängig von einem während des Betriebs erfassten Betriebsparameter zu betätigen, um eine Zahn-auf-Zahn-Stellung (43) aufzuheben.

6. Kraftfahrzeuggetriebevorrichtung nach einem der vorhergehenden Ansprüche,
**dadurch gekennzeichnet, dass**
die Betätigungseinheit (10) zur Betätigung der Getriebebremse (11; 11'; 11") eine Lernfunktion aufweist und dazu vorgesehen ist, über die Lernfunktion wenigstens einen Betriebsparameter zur Betätigung einzulernen.

7. Kraftfahrzeuggetriebevorrichtung nach einem der vorhergehenden Ansprüche,
**dadurch gekennzeichnet, dass**
die Betätigungseinheit (10) dazu vorgesehen ist, die Getriebebremse (11; 11'; 11") in zumindest einem Betriebsmodus zur Aufhebung einer Zahn-auf-Zahn-Stellung (43) mehrmals impulsweise zu betätigen.

8. Kraftfahrzeuggetriebevorrichtung nach einem der Ansprüche 1 bis 7,
**dadurch gekennzeichnet, dass**
die Betätigungseinheit (10) zur Betätigung der Getriebebremse (11) und die Betätigungseinheit zur Betätigung der Trennkupplung (12) dazu vorgesehen sind, die Getriebebremse (11; 11'; 11") und die Trennkupplung (12) zumindest im Wesentlichen zeitgleich anzusteuern.

9. Kraftfahrzeuggetriebevorrichtung nach einem der Ansprüche 1 bis 7,
**dadurch gekennzeichnet, dass**
die Betätigungseinheit (10) zur Betätigung der Getriebebremse (11; 11'; 11") und die Betätigungseinheit zur Betätigung der Trennkupplung (12) zumindest teilweise einstückig ausgebildet sind.

10. Kraftfahrzeuggetriebe (13) mit einer Kraftfahrzeuggetriebevorrichtung nach einem der vorhergehenden Ansprüche.

11. Verfahren zur Aufhebung einer Zahn-auf-Zahn-Stellung (43) von Kupplungsmitteln eines Kraftfahrzeuggetriebes (13), insbesondere mit einer Kraftfahrzeuggetriebevorrichtung nach einem der vorhergehenden Ansprüche, wobei eine Getriebebremse (11; 11'; 11") bei einer erkannten Zahn-auf-Zahn-Stellung (43) betätigt wird,
**dadurch gekennzeichnet, dass**
die Getriebebremse (11; 11'; 11'') und eine Trennkupplung (12) zur Aufhebung einer Zahn-auf-Zahn-Stellung (43) aufeinander abgestimmt betätigt werden.

12. Verfahren nach Anspruch 11,
**dadurch gekennzeichnet, dass**
die Getriebebremse (11; 11'; 11") abhängig von zumindest einem Betriebsparameter betätigt wird.

13. Verfahren nach Anspruch 11 oder 12,
**dadurch gekennzeichnet, dass**
wenigstens ein Betriebsparameter zur Betätigung der Getriebebremse (11; 11'; 11") über eine Lernfunktion eingelernt wird.

14. Verfahren nach Anspruch 11 bis 13,
**dadurch gekennzeichnet, dass**
die Getriebebremse (11; 11'; 11") in zumindest einem Betriebsmodus zur Aufhebung einer Zahn-auf-Zahn-Stellung (43) mehrmals impulsweise betätigt wird.

15. Verfahren nach Anspruch 11,
**dadurch gekennzeichnet, dass**
die Getriebebremse (11; 11'; 11") und die Trennkupplung (12) zumindest im Wesentlichen zeitgleich angesteuert werden.

## Claims

1. Transmission device for a motor vehicle, comprising an actuating unit (10) designed to cancel a tooth-on-tooth position (43) of clutch means (20), in particular of dog clutch means,
wherein the actuating unit (10) is designed to operate a transmission brake (11; 11'; 11") on detection of a tooth-on-tooth position (43),
**characterised by**
an actuating unit for the operation of a disconnect clutch (12), wherein the actuating unit is designed to operate the disconnect clutch (12) on detection of a tooth-on-tooth position (43), wherein
the actuating unit (10) for the operation of the transmission brake (11; 11'; 11") and the actuating unit for the operation of the disconnect clutch (12) are designed to initiate synchronised operations in order to cancel a tooth-on-tooth position (43).

2. Transmission device for a motor vehicle according to claim 1,
**characterised by**
a transmission brake (11, 11") designed as a multi-disc brake.

3. Transmission device for a motor vehicle according to any of the preceding claims,
**characterised by**
the transmission brake (11") designed as a rheological brake unit.

4. Transmission device for a motor vehicle according to any of the preceding claims,
**characterised by**
the transmission brake (111') designed as motor-driven brake unit.

5. Transmission device for a motor vehicle according to any of the preceding claims,
**characterised in that**
the actuating unit (10) is designed to operate the transmission brake (11; 11'; 11") at least in dependence on one operating parameter detected during operation in order to cancel a tooth-on-tooth position (43).

6. Transmission device for a motor vehicle according to any of the preceding claims,
**characterised in that**
the actuating unit (10) for the operation of the transmission brake (11; 11'; 11") comprises a learning function and is designed to learn at least one operating parameter for operation.

7. Transmission device for a motor vehicle according to any of the preceding claims,
**characterised in that**
the actuating unit (10) is designed for the repeated pulsed operation of the transmission brake (11; 11'; 11") in at least one operating mode in order to cancel a tooth-on-tooth position (43).

8. Transmission device for a motor vehicle according to any of claims 1 to 7,
**characterised in that**
the actuating unit (10) for the operation of the transmission brake (11; 11'; 11") and the actuating unit for the operation of the disconnect clutch (12) are designed to select the transmission brake (11; 11'; 11") and the disconnect clutch (12) at least substantially simultaneously.

9. Transmission device for a motor vehicle according to any of claims 1 to 7,
**characterised in that**
the actuating unit (10) for the operation of the transmission brake (11; 11'; 11") and the actuating unit for the operation of the disconnect clutch (12) are at least partially designed as a single piece.

10. Motor vehicle transmission with a transmission device for a motor vehicle according to any of the preceding claims.

11. Method for the cancellation of a tooth-on-tooth position (43) of clutch means of a motor vehicle transmission (13), in particular comprising a transmission device for a motor vehicle according to any of the preceding claims, wherein a transmission brake (11; 11'; 11") is operated on detection of a tooth-on-tooth position (43),
**characterised in that**
the transmission brake (11; 11'; 11") and a disconnect clutch (12) are operated synchronously in order to cancel a tooth-on-tooth position (43).

12. Method according to claim 11,
**characterised in that**
the transmission rake (11; 11 11") is operated in dependence on at least one operating parameter.

13. Method according to claim 11 or 12,
**characterised in that**
at least one operating parameter for the operation of the transmission brake (11; 11'; 11") is learned by way of a learning function.

14. Method according to any of claims 11 to 13,
**characterised in that**
the transmission brake (11; 11'; 11 ") is repeatedly pulsed in at least one operating mode in order to cancel a tooth-on-tooth position (43).

15. Method according to claim 11,
**characterised in that**
the transmission brake (11; 11'; 11") and the disconnect clutch (12) are at least substantially selected simultaneously.

## Revendications

1. Dispositif de transmission d'un véhicule automobile, muni d'une unité d'actionnement (10), laquelle est prévue pour supprimer une position dent sur dent (43) de moyens d'accouplement (20), en particulier de moyens d'accouplement à crabots, l'unité d'actionnement (10) étant prévue pour actionner un frein de transmission (11; 11'; 11") lorsqu'une position dent sur dent (43) est détectée, **caractérisé par** une unité d'actionnement pour actionner un embrayage de coupure (12), l'unité d'actionnement étant prévue pour actionner l'embrayage de coupure (12) lorsqu'une position dent sur dent (43) est détectée, l'unité d'actionnement (12) pour actionner le frein de transmission (11, 11', 11") et l'unité d'actionnement pour actionner l'embrayage de coupure (12) étant prévues pour déclencher de manière harmonisée des actionnements pour supprimer une position dent sur dent (43).

2. Dispositif de transmission d'un véhicule automobile selon la revendication 1, **caractérisé par** le frein de transmission (11, 11") formé par un frein à disques multiples.

3. Dispositif de transmission d'un véhicule automobile selon l'une quelconque des revendications précédentes, **caractérisé par** le frein de transmission (11 ") formé par un dispositif de freinage rhéologique.

4. Dispositif de transmission d'un véhicule automobile selon l'une quelconque des revendications précédentes, **caractérisé par** le frein de transmission (11 ") formé par un dispositif de freinage motorisé.

5. Dispositif de transmission d'un véhicule automobile selon l'une quelconque des revendications précédentes, **caractérisé en ce que** l'unité d'actionnement (10) est destinée à actionner le frein de transmission (11, 11', 11") au moins en fonction d'un paramètre de fonctionnement détecté pendant le fonctionnement pour supprimer une position dent sur dent (43).

6. Dispositif de transmission d'un véhicule automobile selon l'une quelconque des revendications précédentes, **caractérisé en ce que** l'unité d'actionnement (10) destinée à actionner le frein de transmission (11, 11', 11") présente une fonction adaptative et est prévue pour enregistrer au moins un paramètre de fonctionnement au moyen de la fonction adaptative.

7. Dispositif de transmission d'un véhicule automobile selon l'une quelconque des revendications précédentes, **caractérisé en ce que** l'unité d'actionnement (10) est destinée à actionner par plusieurs impulsions le frein de transmission (11, 11', 11") dans au moins un mode de fonctionnement pour supprimer une position dent sur dent (43).

8. Dispositif de transmission d'un véhicule automobile selon l'une quelconque des revendications 1 à 7, **caractérisé en ce que** l'unité d'actionnement (10) destinée à actionner le frein de transmission (11) et l'unité d'actionnement destinée à actionner l'embrayage de coupure (12) sont prévues pour commander au moins de façon sensiblement synchrone le frein de transmission (11, 11') et l'embrayage de coupure (12).

9. Dispositif de transmission d'un véhicule automobile selon l'une quelconque des revendications 1 à 7, **caractérisé en ce que** l'unité d'actionnement (10) destinée à actionner le frein de transmission (11, 11', 11 ") et l'unité d'actionnement destinée à actionner l'embrayage de coupure (12) sont réalisés au moins partiellement d'un seul tenant.

10. Transmission de véhicule automobile (13) avec un dispositif de transmission de véhicule automobile selon l'une quelconque des revendications précédentes.

11. Procédé pour supprimer une position dent sur dent (43) de moyens d'accouplement d'une transmission de véhicule automobile (13), en particulier avec un dispositif de transmission de véhicule automobile selon l'une quelconque des revendications précédentes, un frein de transmission (11, 11', 11") est actionné lors de la détection d'une position dent sur dent (43), **caractérisé en ce que** le frein de transmission (11, 11', 11") et l'embrayage de coupure (12) pour supprimer une position dent sur dent (43) sont actionnés de manière harmonisée.

12. Procédé selon la revendication 11, **caractérisé en ce que** le frein de transmission (11, 11', 11") est actionné en fonction d'au moins un paramètre de fonctionnement.

13. Procédé selon la revendication 11 ou 12, **caractérisé en ce qu'**au moins un paramètre de fonctionnement pour l'actionnement du frein de transmission (11, 11', 11") est enregistré par une fonction adaptative.

14. Procédé selon la revendication 11 à 13, **caractérisé en ce que** le frein de transmission (11, 11', 11") est actionné par plusieurs impulsions dans au moins un mode de fonctionnement pour supprimer une position dent sur dent (43).

15. Procédé selon la revendication 11, **caractérisé en ce que** le frein de transmission (11, 11', 11") et l'embrayage de coupure (12) sont commandés au moins de façon sensiblement synchrone.
